Europäisches Patentamt

(19) European Patent Office (11) Numéro de publication: **0 013 341**

Office européen des brevets **B1**

(12) **FASCICULE DE BREVET EUROPEEN**

(45) Date de publication du fascicule du brevet: **01.12.82** (51) Int. Cl.³: **H 04 B 1/66**

(21) Numéro de dépôt: **79104872.1**

(22) Date de dépôt: **04.12.79**

(54) Système de compression dans le temps de signaux de la parole.

(30) Priorité: **02.01.79 US 227**

(43) Date de publication de la demande:
**23.07.80 Bulletin 80/15**

(45) Mention de la délivrance du brevet:
**01.12.82 Bulletin 82/48**

(84) Etats contractants désignés:
**DE FR GB**

(56) Documents cités:
**GB - A - 1 264 956**

**FUNKSCHAU, vol. 49, no. 18, août 1977, Munich, DE "Trotz veränderten Geschwindigkeit: Gleiche Tonhöle", pages 847 à 851**
**JOURNAL OF THE AUDIO ENGINEERING SOCIETY, vol. 20, no. 9, novembre 1972 New York US LEE: "Time compression and expansion of speech by the sampling method", page 738— 742**

(73) Titulaire: **International Business Machines Corporation**
**Armonk, N.Y. 10504 (US)**

(72) Inventeur: **Bringol Charles Ronald**
**3903 Sidehill Path**
**Austin, Texas 78731 (US)**
Inventeur: **Snyder, Garry Francis**
**1506 Creekview Drive**
**Austin, Texas 78664 (US)**

(74) Mandataire: **Bonneau, Gérard**
**COMPAGNIE IBM FRANCE Département de Propriété Industrielle**
**F-06610 La Gaude (FR)**

Systéme de compression dans le temps de signaux de la parole

Domaine technique

La présente invention concerne la transmission de la parole et, plus particulièrement, un systeme de compression dans le temps de signaux de la parole enregistrés.

Etat de la technique antérieure

C'est un fait bien connu que la voix ou la parole peut être compréhensible à une vitesse beaucoup plus grande que la vitesse normale d'élocution sans entraîner un facteur de fatigue à condition que la qualité de l'audition soit normale et dépourvue de bruit et de distorsion. Plusieurs techniques et appareils sont bien connus dans l'art antérieur pour accélérer la lecture des signaux enregistrés de la voix.

Le brevet des E.U.A. No. 3 803 363 décrit un appareil pour modifier la durée de données analogiques, comprenant un dispositif d'emmagasinage, des moyens pour emmagasiner les données d'entrée dans des positions d'emmagasinage successives selon un premier débit, des moyens pour sortir les échantillons des données ainsi emmagasinées dans les positions successives du dispositif d'emmagasinage, selon un second débit. Dans cet appareil, la sortie d'une nouvelle séquence d'échantillons de la voix est amorcée en tenant compte de la différence existant entre le débit d'entrée et le débit de sortie et de la représentation des données emmagasinées. La nouvelle séquence est amorcée à une position d'emmagasinage séparée de la position à partir de laquelle ont été sorties les dernières données de la séquence précédente Ceci permet de transférer en sortie des séquences de données ne comportant pas de transitions bursques entre elles.

Le brevet des E.U.A. No. 3 934 094 utilise également un seul dispositif de mémoire pour recevoir les signaux d'entrée de la parole en vue de les reproduire à un débit différent du débit d'origine. Ce brevet ne décrit aucun moyen pour éliminer les bruits dus aux transitions lorsqu'il y a commutation de la sortie ou de l'entrée.

Le brevet des E.U.A. No. 3 621 150 utilise une paire de mémoires à registres à décalage de façon successive pour recevoir des segments d'entrée des signaux de la parole sous forme numérique. Des moyens de contrôle sont utilisés pour assurer la commutation entre les deux registres pour sortir les données lorsqu'un registre est totalement chargé, ce qui donne ainsi des segments de sortie de longueur fixe. Les résultats obtenus à l'aide de l'appareil utilisant les principes décrits dans ce brevet sont semblables à ceux obtenus à l'aide de dispositifs connus dans l'art antérieur, en ce sens que rien n'est prévu pour essayer de résoudre le problème de la transition ou du déclic parasite qui apparaît lorsque l'on passe d'une mémoire à l'autre pour sortir les données.

Le brevet des E.U.A. No. 3 816 664 décrit l'utilisation de deux mémoires pour séparer les fonctions de lecture et d'écriture dans un appareil de compression de signaux en temps réel. Les rôles d'écriture ou de lecture des mémoires sont inversés sous la commande d'une logique qui détecte le moment où le compteur associé à la mémoire en mode d'écriture atteint son compte maximum.

Ainsi, seule une technique de l'art antérieur à savoir celle décrite dans le brevet des E.U.A. No. 3 803 363 impose une restriction sur le moment où les segments de la voix sont juxtaposés. Autrement, les segments sont juxtaposés automatiquement sans tenir compte du contenu de lav voix et cette juxtaposition est basée seulement sur des longueurs de segment fixes, c'est-à-dire, sur des longueurs pré-sélectionnées ou limitées par la longueur de la mémoire. En conséquence, le problème relatif au bruit dû à la juxtaposition des segments se retrouve dans l'art antérieur à des degrés plus ou moins faibles. Les techniques de l'art antérieur basées sur une lecture accélérée de la voix enregistrée ont toutes comme inconvénient le bruit dû à la juxtaposition des segments, quie est désagréable à la personne qui écoute.

Exposé de l'invention

L'objet de la présente invention est un système de compression dans le temps des signaux de la parole évitant que l'opération s'accompagne de bruit et de distorsion et consistant à juxtaposer des segments de la parole à partir d'une paire de mémoires-tampons lorsque les signaux de tension de sortie provenant de chaque mémoire sont d'égale amplitude et se trouvent dans une gamme de tension spécifique, avoisinant zéro, indépendamment de la longueur des segments de sortie.

La parole enregistrée est échantillonnée et temporairement emmagasinée de façon successive dans une paire de mémoire dynamiques. Comme cela sera mis en évidence dans la suite de la description, ces mémoires sont, en fait, des mémoires-tampons de longueur variable. La sortie reliée au dispositif d'utilisation est commutée entre les mémoires-tampons lorsque le niveau de tension de chacune d'elle se trouve à un niveau de tension zéro ou avoisinant zéro et lorsque les niveaux enregistrés sont d'égale amplitude. Il s'ensuit que la sortie de la parole provenant du dispositif d'utilisation a un son naturel dépourvu de tout bruit étant donné que la logique de commutation de la présente invention analyse les signaux de sortie dans chacune des mémoires-tampons et commande la commutation de sorte qu'elle se fasse lorsque le niveau de tension de sortie de chaque mémoire se trouve dans une gamme

de $\pm 100$ millivolts et lorsque ces mémoires ont la même amplitude. La commutation se fait indépendamment de la longueur du segment de sortie.

Avec le système de la présente invention, le bruit désagréable inhérent aux techniques de l'art antérieur est totalement éliminé étant donné que la juxtaposition des segments se fait à un point optimal. Si ce point de juxtaposition optimal n'est pas trouvé, ceci signifie qu'il y a un défaut et que la longueur maximale du segment ne correspond pas à la capacité de la mémoire-tampon alors lue. C'est-à-dire, si la mémoire-tampon dont la sortie est connectée au dispositif d'utilisation se vide avant que les deux conditions ne soient satisfaites, le système de la présente invention procède à une commutation sur l'autre mémoire-tampon.

D'autres caractéristiques et avantages de la présente invention ressortiront mieux de l'exposé qui suit, fait en référence aux dessins annexés à ce texte, qui représentent un mode de réalisation préféré de celle-ci.

Brève description des figures

La figure 1 représente un schéma de fonctionnement général du système de la présente invention.

La figure 2 représente un schéma plus détaillé de la logique de seuil de commutation 28 de la figure 1 et de la commande de la logique de commutation 32 de la figure 1.

La figure 3 représente un diagramme des temps intervenant dans le fonctionnement de la présente invention.

Mode de réalisation préféré

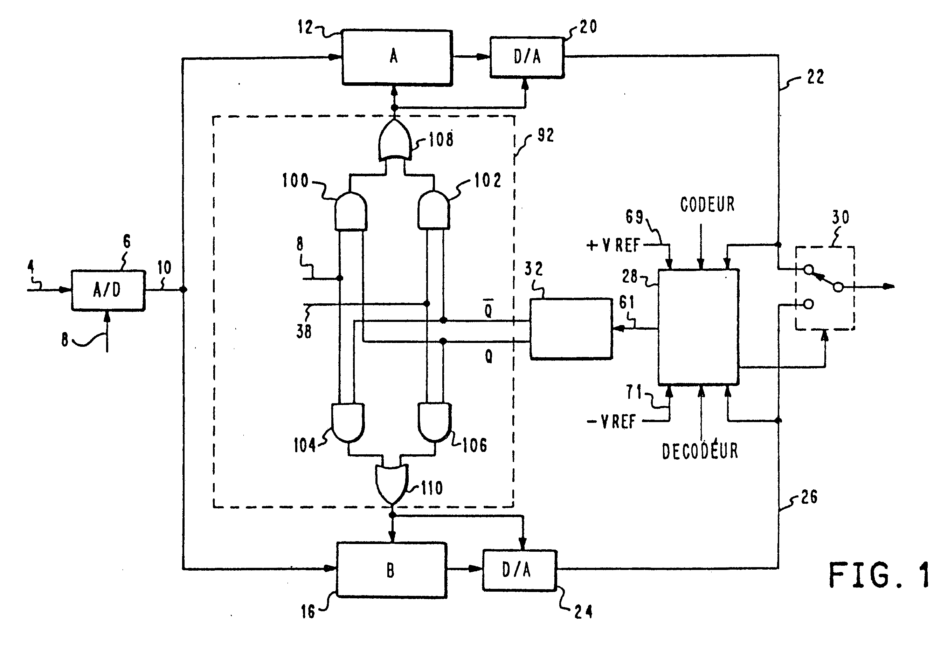

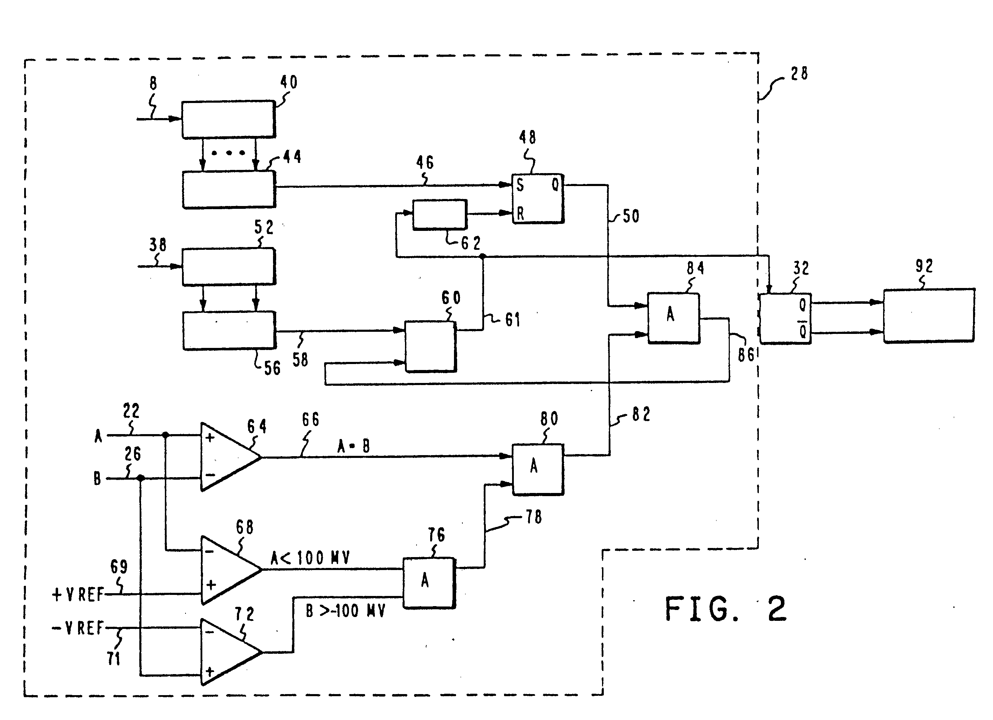

En référence à la figure 1, le signal de la parole sur la ligne 4 provenant, par exemple, d'un disque ou d'une bande magnétique enregistrée, est appliqué à un convertiseur analogique-numérique 6 qui convertit le signal analogique de la parole en un signal numérique. Des impulsions provenant d'une horloge d'encodage appliquées à la ligne 8 sont utilisées pour chronomètrer le convertiseur analogique-numérique 6 en lui permettant d'échantillonner le signal présent sur la ligne 4. La sortie numérique sur la ligne 10 est introduite dans l'une des mémoires dynamiques 12 et 16 sous la commande des impulsions provenant de l'horloge d'encodage sur la ligne 8. Les mémoires 12 et 16 sont de préférence des registres à décalage dynamiques, mais peuvent être des dispositifs d'emmagasinage de tout autre type, comme cela est bien compris de l'homme de l'art. Pour faciliter la description de la présente invention, ces dispositifs seront appelés mémoires-tampons A et B. Les mémoires 12 et 16 sont connectées respectivement aux convertisseurs numériques-analogiques 20 et 24 qui sont de préférence du type à démodulation synchrone. La sortie analogique provenant des convertisseurs numériques-analogiques 20 et 24 est envoyée le long des lignes 22 et 26 à la logique de seuil de commutation 28 qui va être décrite de façon plus détaillée en référence à la figure 2. La sortie sur la ligne 61 provenant de la logique 28 est appliquée à l'interrupteur à bascule 32 afin de commuter les impulsions d'horloge d'encodage et de décodage présentes sur les lignes 8 et 38 vers respectivement la mémoire dynamique 12 et la mémoire dynamique 16 ou l'inverse. En même temps, la logique de seuil de commutation 28 procède alternativement à un changement de la sortie sur le dispositif d'utilisation, comme le montre le block de commutation 30. Il est à noter que la fréquence de l'horloge d'encodage sur la ligne 8 est plus grande que la fréquence de l'horloge de décodage sur la ligne 38 de façon à obtenir le taux de compression voulu.

La logique d'horloge 92 est une logique directe pour commuter les impulsions d'horloge entre les mémoires dynamiques 12 et 16. Les sorties $Q$ et $\overline{Q}$ en provenance de l'interrupteur à bascule 32 sont utilisées en tant que signaux de conditionnement pour appliquer les impulsions d'horloge présentes sur les lignes 8 et 38, à la mémoire appropriée 12 ou 16. La sortie $Q$ provenant de l'interrupteur 32 ainsi que les impulsions d'horloge d'encodage sur la ligne 8 sont appliquées à la porte ET 100. La sortie $\overline{Q}$ en provenance de l'interrupteur 32 et les impulsions d'horloge de décodage sur la ligne 38 sont appliquées à la porte ET 102. Les sorties provenant des portes ET 100 et 102 sont appliquées à la porte OU 108. La sortie provenant de la porte OU 108 est appliquée à la mémoire 12 ainsi qu'au convertisseur numérique-analogique 20. De façon semblable, les impulsions d'horloge d'encodage sur la ligne 8 et la sortie $\overline{Q}$ provenant de l'interrupteur 32 sont appliquées à la porte ET 104. La sortie $Q$ provenant de l'interrupteur 32 est utilisée pour envoyer la fréquence de base de décodage sur la ligne 38 à la porte ET 106. Les sorties provenant des portes ET 104 et 106 sont appliquées à la porte OU 110. La sortie de la porte OU 110 est appliquée à la mémoire 16 ainsi qu'au convertisseur numérique-analogique 24. La sortie des mémoires dynamiques 12 et 16 est appliquée à un dispositif d'utilisation.

La figure 2 représente de façon plus détaillée la logique de seuil de commutation 28 et la commande de l'interrupteur à bascule 32 de la figure 1. La logique de seuil de commutation 28 est associée aux deux mémoires dynamiques 12 et 16 et reçoit la sortie provenant des convertisseurs 20 et 24 respectivement, sur les lignes 22 et 26, comme le montre la figure 1. La logique de seuil de commutation 28 fonctionne pour commuter la sortie sur un dispositif d'utilisation (non représenté), par le commutateur 30.

Les impulsions provenant de l'horloge d'encodage sur la ligne 8 sont envoyées au compteur 40 qui est connecté au décodeur 44 pour déterminer le moment où la mémoire d'entrée est pleine. C'est-à-dire, une comparaison a lieu lorsque le compte dans le compteur 40 est égal à la capacité maximale de l'une ou l'autre des mémoires 12 et 16 de la figure 1. Le signal produit dans le décodeur 44 est appliqué par la ligne 46 pour enclencher la bascule à verrouillage 48 qui, lorsqu'elle est enclenchée, (condition active) applique le signal de "Début de Mesure" présent sur la ligne 50 à la porte ET 84.

Les impulsions d'horloge de décodage sur la ligne 38 sont envoyées au compteur 52 qui est connecté au décodeur 56 pour déterminer le moment où la mémoire de sortie est vide. C'est-à-dire, une comparaison a lieu lorsque le compte dans le compteur 52 est égal à la capacité maximale de l'une ou l'autre des mémoires dynamiques 12 et 16. Le signal provenant du décodeur 56 sur la ligne 58 est appliqué à la porte OU 60. La sortie de la porte OU 60 sur la ligne 61 passe dans le circuit à retard 62 pour des raisons qui seront données dans la suite, et représente le signal de restauration de la bascule 48 (condition inactive). Le circuit qui vient juste d'être décrit est utilisé pour permettre aux impulsions d'horloge d'encodage et de décodage présentes respectivement sur les lignes 8 et 38 d'être commutées entre les mémoires dynamiques 12 et 16 lorsque le niveau de sortie de chacune de ces deux mémoires se trouve dans une gamme de tension prédéterminée de l'ordre de 100 millivolts et lorsque les niveaux de sortie onto la même amplitude.

Le comparateur 64 est utilisé pour comparer la sortie analogique provenant des convertisseurs numérique-analogique 20 et 24 sur les lignes respectives 22 et 26 (figure 1). C'est-à-dire, la tension de sortie de la mémoire-tampon A est comparée à la tension de sortie de la mémoire-tampon B. La sortie du comparateur 64 sur la ligne 66 se trouve à un niveau positif lorsque les signaux sur les lignes 22 et 26 sont égaux, ce qui signifie que l'amplitude de sortie des mémoires-tampons A et B, est égale. Cette sortie sur la ligne 66 est appliquée comme première entrée à la porte ET 80. Les signaux sur les lignes 22 et 26 sont également envoyés respectivement aux comparateurs 68 et 72. Une tension de référence positive de +100 mv est appliquée au comparateur 68 et une tension de référence négative de −100 mv est appliquée au comparateur 72 sur les lignes respectives 69 et 71.

Les sorties provenant des comparateurs 68 et 72 sont envoyées à la porte ET 76 pour indiquer que les signaux présents sur les lignes 22 et 26 se trouvent dans une gamme de ±100 mv. La sortie provenant de la porte ET 76 sur la ligne 78 est appliquée en tant que seconde entrée à la porte ET 80. La sortie provenant de la porte ET 80 sur la ligne 82 indique que les signaux sur les lignes 22 et 26 ont la même amplitude et qu'ils se trouvent dans la gamme de ±100 mv; en d'autres termes, il y a "juxtaposition" de segments d'échantillons. La sortie provenant de la porte ET 80 sur la ligne 82 est appliquée en tant qu'autre entrée à la porte ET 84 qui engandre le signal de "Changement" sur la ligne 86.

La première entrée, le signal de Début de Mesure sur la ligne 50 appliqué à la porte ET 84 indique le début de la recherche d'un "Point de Juxtaposition optimale". La seconde entrée de la porte ET 84, sur la ligne 82, indique que le "point de juxtaposition optimale" a été trouvé et avec ces deux entrées la porte ET 84 envoie alors le signal de "Changement" sur la ligne 86 maintenant que la mémoire-tampon dont la sortie n'est pas connectée au dispositif d'utilisation, est pleine, et que les niveaux de tension de sortie provenant des deux mémoires-tampons A et B ont la même amplitude et se trouvent dans la gamme de ±100 mv;

le signal de "Changement" sur la ligne 86 est appliqué à la porte OU 60. La sortie provenant de la porte OU 60 sur la ligne 61 est appliquée à l'interrupteur 32 et au dispositif à retard 62. Le dispositif 62 retarde la restauration de la bascule à verrouillage 48 terminant ainsi le "Début de Mesure" afin d'assurer un temps suffisant pour permettre à l'interrupteur 32 de basculer.

La sortie Q de l'interrupteur 32 permet, par la commande du commutateur 92, à la première mémoire dynamique 12 (mémoire A), d'être mémoire d'entrée et à la seconde mémoire dynamique 16 (mémoire B), d'être mémoire de sortie. La sortie Q de l'interrupteur 32 permet juste la condition opposée. La sortie Q de l'interrupteur 32 (ainsi que $\overline{Q}$) est appliquée au commutateur d'horloge 92 pour accomplir la commutation des impulsions d'horloge.

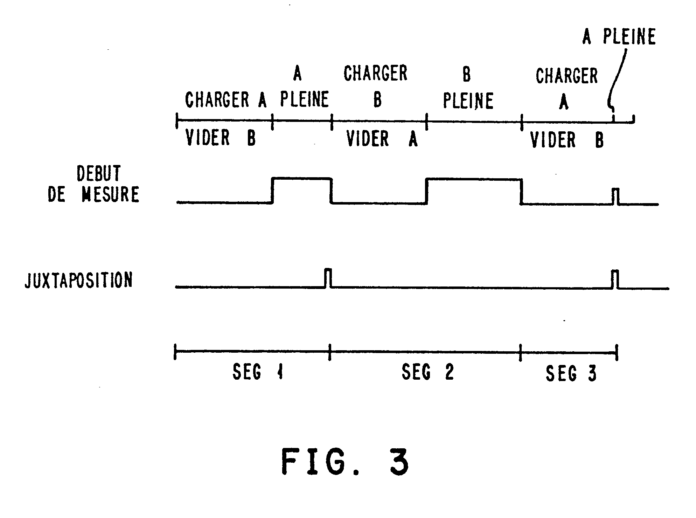

Le diagramme des temps de la figure 3 illustre les cas qui peuvent apparaître durant le fonctionnement du dispositif de la presente invention. Dans cet exemple, on suppose une compression de 2:1; en conséquence, la fréquence de l'horloge d'encodage est double de la fréquence de l'horloge de décodage de sorte que le temps requis pour charger une mémoire-tampon est la moitié du temps requis pour la vider.

La ligne supérieure du diagramme des temps indique les temps durant lesquels la mémoire-tampon A est chargée et les temps durant lesquels la mémoire B est vidée. Il est à noter que les temps de charge et de décharge (ou vidage) sont exactement les mêmes. Lorsque la mémoire-tampon A est pleine—signal de Début de Mesure—la sortie de la bascule à verrouillage 48 passe à un niveau "haut" sur la ligne 50. La mémoire-tampon continue cependant à recevoir des données; mais qu'importe puisque seulement une partie des données emmagasinées sera utilisée.

Il est à rappeller, d'après la description de la figure 2, que le signal de "Début de Mesure" sur la ligne 50, marque le début de la recherche d'une point de juxtaposition optimale. Le signal de "Début de Mesure" reste à un niveau haut jusqu'à ce qu'il y ait "Juxtaposition", c'est-à-dire, jusqu'à ce que les signaux sur les lignes 22 et 26 aient la même amplitude et se trouvent dans une gamme de ± 100 mv, comme cela est indiqué par la sortie provenant de la porte ET 80 sur la ligne 82. A ce moment, le signal de "Début de Mesure" passe à un niveau "bas", et les impulsions d'horloge sont commutées, terminant ainsi le segment 1.

Le segment 2 commence en même temps que la mémoire-tampon B se charge et que la mémoire-tampon A se vide. Lorsque la mémoire-tampon B est pleine, comme cela est indiqué par le signal sur la ligne 46, le signal de Début de Mesure prend un niveau haut. Les données continuent à être chargées dans la mémoire-tampon B. Dans le segment 2, le signal de Début de Mesure reste à un niveau haut jusqu'à ce que la mémoire-tampon A soit complètement vidée et qu'un signal soit engendré sur la ligne 58. Lorsque le signal de Début de Mesure est à un niveau haut, il y! a recherche d'un "point de juxtaposition optimale". Il est à rappeler que le système de la présente invention présente un défaut si le "point de juxtaposition optimale" n'est pas trouvé. Le segment 2 est alors un exemple d'un tel défaut puisque le signal de "Début de Mesure" passe à un niveau bas lorsque la mémoire-tampon A est vide et non pas en réponse à une juxtaposition. Il n'y a pas eu juxtaposition étant donné qu'une fois que la mémoire-tampon B a été pleine, les niveaux de tension de sortie des mémoires-tampons A et B n'ont, à aucun moment, rempli les conditions requises, à savoir, avoir une amplitude égale et se trouver dans une gamme de ±100 mv. Il est à noter que ce cas où il y a défaut ne se produit que rarement et n'entraîne pas de ce fait le déclic si désagréable à la reproduction.

Le segment 3 démarre en même temps que la mémoire-tampon A se charge et que la mémoire-tampon B se vide. Le Début de Mesure commence lorsque la mémoire-tampon d'entrée A est pleine et se termine lorsqu'il y a "juxtaposition". Dans cet exemple, la recherche d'un "point de juxtaposition optimale" est courte et se termine avant que la mémoire-tampon B ne soit vide. Ainsi, y-a-t-il des segments de sortie de longueur variable étant donné que la commutation des signaux d'horloge qui détermine le début d'un nouveau segment dépend du moment où les deux conditions décrites cidessus sont satisfaites. La Juxtaposition peut avoir lieu en un temps quelconque venant après le remplissage de la mémoire d'entrée.

Bien que la présente invention ait été décrite en utilisant des moyens d'emmagasinage numériques et des convertisseurs analogiques-numériques et numériques-analogiques, elle ne se limite pas à ces dispositifs.

Elle pourrait être réalisée en utilisant des registres à décalage analogiques, ce qui éviterait d'utiliser les convertisseurs analogiques-numériques et numériques-analogiques mis en jeu dans la description précédente.

## Revendications

1. Système de compression dans le temps de signaux de la parole comprenant: des première (12) et seconde (16) mémoires-tampons connectées à l'entrée pour recevoir les signaux de la parole, et des moyens de commande (28, 30, 32, 92) pour charger alternativement les signaux dans l'une des mémoires-tampons selon un premier débit et lire l'autre mémoire-tampon selon un deuxième débit moins élevé que ledit premier débit et fournier les signaux ainsi lus à un dispositif d'utilisation; ledit système étant caractérisé en ce que lesdits moyens de commande comprennent des moyens de commutation (28) pour commuter l'entrée du dispositif d'utilisation de la sortie de la mémoire-tampon lue à la sortie de l'autre mémoire-tampon lorsque d'une part, ladite autre mémoire-tampon est pleine, et d'autre part, les niveaux de sortie desdites mémoires se trouvent compris à l'intérieur d'un intervalle prédéterminé.

2. Système selon la revendication 1 caractérisé en ce que lesdites mémoires-tampons (12, 16) sont des mémoires numériques, et en ce qu'un convertisseur analogique-numérique (6) connecté à l'entrée desdites mémoires-tampons reçoit les signaux analogiques de la parole et fournit des signaux numériques auxdites mémoires-tampons.

3. Système selon la revendication 2 caractérisé en ce qu'il comporte en outre des premier (20) et second (24) convertisseurs numériques-analogiques connectés respectivement aux sorties desdites première (12) et seconde (16) mémoires tampons, et des moyens de comparaison (64, 68, 72) pour comparer les sorties desdits premier et second convertisseurs numériques-analogiques, lesdits moyens de commutation (28) commutant l'entrée du dispositif d'utilisation de la sortie d'un desdits convertisseurs numériques-analogiques à la sortie de l'autre lorsque les niveaux de sortie desdits convertisseurs se trouvent compris à l'intérieur d'un intervalle prédeterminée.

4. Système selon la revendication 3 caractérisé en ce que lesdits moyens de commutation (28) commutent l'entrée du dispositif d'utilisation de la sortie d'un desdits convertisseurs numériques-analogiques (20 ou 24) à la sortie de l'autre lorsque leurs niveaux de sortie sont au voisinage du niveau zéro, ledit intervalle prédéterminé étant centré sur le niveau zéro.

5. Système selon l'une des revendications 3 et 4 caractérisé en ce que lesdits moyens de commutation (28) commutent l'entrée du dispositif d'utilisation de la sortie d'un desdits convertisseurs numériques-analogiques (20 ou 24) à la sortie de l'autre lorsque leurs niveaux de sortie sont substantiellement égaux.

6. Système selon l'une quelconque des revendications 3 à 5 caractérisé en ce que l'amplitude dudit intervalle prédéterminé est inférieure à 2% de l'amplitude maximale des niveaux de sortie desdits convertisseurs numériques-analogiques (20, 24).

7. Système selon l'une quelconque des revendications 3 à 6 caractérisé en ce que lesdits moyens de commutation (28) commutent l'entrée du dispositif d'utilisation de la sortie de l'un (20) desdits convertisseurs numériques-analogiques à la sortie de l'autre (24) lorsque la mémoire-tampon lue (12) est vide sans que les conditions relatives aux niveaux de sortie desdits convertisseurs numériques-analogiques soient réalisées.

8. Système selon l'une quelconque des revendications 3 à 7 caractérisé en ce que lesdits moyens de comparaison comprennent:

un premier comparateur (64) pour fournir un signal en cas d'égalité des niveaux de sortie desdits convertisseurs numériques-analogiques (20, 24),

un deuxième comparateur (68) pour fournir un signal si la sortie de l'un desdits convertisseurs numériques-analogiques est inférieure à une première valeur prédéterminée,

un troisième comparateur (72) pour fournir un signal si la sortie de l'autre desdits convertisseurs numériques-analogiques est supérieure à une seconde valeur prédéterminée,

un moyen pour fournir un signal de commutation commutant l'entrée du dispositif d'utilisation de la sortie d'un desdits convertisseurs numériques-analogiques à la sortie de l'autre, en réponse aux signaux fournis par lesdits premier, deuxième et troisième comparateurs.

**Patentansprüche**

1. System zur Zeitkompression von Sprachsignalen, das einschliesst: einen ersten (12) und zweiten (16) an seinen Eingang angeschlossenen Puffer zum Empfang der Sprachsignale, und Steuermittel (28, 30, 32, 92) zum wechselweisen Speichern der Signale in einem der Puffer mit einer ersten Geschwindigkeit und Auslesen derselben aus dem anderen Puffer mit einer zweiten Geschwindigkeit, die kleiner ist als die erste, und zur Abgabe der so ausgelesenen Signale an ein Benutzergerät, dadurch gekennzeichnet, dass die Steuermittel einschliessen: Schaltmittel (28) zum Umschalten des Eingangs des Benutzergerätes vom Ausgang des ausgelesenen Puffers auf den Ausgang des anderen Puffers wenn einerseits dieser andere Puffer voll ist und andererseits die Ausgangspegel der Speicher innerhalb eines vorgegebenen Intervalls liegen.

2. System nach Anspruch 1, dadurch gekennzeichnet, dass die Puffer (12, 16) Digitalspeicher sind, und dass ein an den Eingang der Puffer angeschlossener Analog-Digital-Umsetzer (6) die analogen Sprachsignale empfängt und digitale Signale an die Puffer liefert.

3. System nach Anspruch 2, dadurch gekennzeichnet, dass es ausserdem einschliesst: einen ersten (20) und zweiten (24) jeweils an die Ausgänge der ersten (12) und zweiten (16) Puffer angeschlossenen Digital-Analog-Umsetzer, und Vergleichsmittel (64, 68, 72) zum Vergleichen der Ausgänge des ersten und zweiten Digital-Analog-Umsetzers, wobei die Schaltmittel (28) den Eingang des Benutzergerätes vom Ausgang des einen Digital-Analog-Umsetzers auf den Ausgang des anderen Digital-Analog-Umsetzers schalten, wenn die Ausgangspegel der Umsetzer sich innerhalb eines vorgegebenen Intervalls befinden.

4. System nach Anspruch 3, dadurch gekennzeichnet, dass die Schaltmittel (28) den Eingang des Benutzergerätes vom Ausgang des einen Digital-Analog-Umsetzers (20 oder 24) auf den Ausgang des anderen schalten, wenn ihre Ausgangspegel in der Nähe des Nullpegels liegen, wobei das vorgegebene Intervall auf den Nullpegel zentriert ist.

5. System nach einem der Ansprüche 3 und 4, dadurch gekennzeichnet, dass die Schaltmittel (28) den Eingang des Benutzergerätes vom Ausgang des einen Digital-Analog-Umsetzers (20 oder 24) auf den Ausgang des anderen schalten, wenn ihre Ausgangspegel praktisch gleich sind.

6. System nach einem der Ansprüche 3 bis 5, dadurch gekennzeichnet, dass die Amplitude des vorgegebenen Intervalls um 2% kleiner ist, als die maximale Amplitude der Ausgangspegel der Digital-Analog-Umsetzer (20, 24).

7. System nach einem der Ansprüche 3 bis 6, dadurch gekennzeichnet, dass die Schaltmittel (28) den Eingang des Benutzergerätes vom Ausgang des einen (20) Digital-Analog-Umsetzers auf den Ausgang des anderen (24) schalten, wenn der ausgelesene Puffer (12) leer ist, ohne dass die Bedingungen bezüglich der Ausgangspegel der Digital-Analog-Umsetzer erfüllt sind.

8. System nach einem der Ansprüche 3 bis 7, dadurch gekennzeichnet, dass die Vergleichsmittel einschliessen:

einen ersten Vergleicher (64) zur Bereitstellung eines Signals, falls die Ausgangspegel der Digital-Analog-Umsetzer (20, 24) gleich sind,

einen zweiten Vegleicher (68) zur Bereitstellung eines Signals, falls der Ausgang eines Digital-Analog-Umsetzers kleiner ist, als ein erster vorgegebener Wert,

einen dritten Vergleicher (72) zur Bereitstellung eines Signals, falls der Ausgang des anderen Digital-Analog-Umsetzers hoeher ist, als ein zweiter vorgegebener Wert,

ein Mittel zum Erzeugen eines Umschaltsignals zum Umschalten des Eingangs des Benutzergerätes vom Ausgang des einen Digital-Analog-Umsetzers auf den Ausgang des anderen, als Antwort auf die vom ersten, zweiten und dritten Vergleicher gelieferten Signale.

## Claims

1. A system for time compression of speech signals comprising: a first (12) and a second (16) buffer connected to the input for receiving the speech signals, and control means (28, 30, 32, 92) for alternatively storing the signals in one of the buffer storages at a first rate and reading the other buffer storage at a second rate lower than said first rate and for providing the signals read out to a user device; said system being characterized in that said control means comprise switching means (28) for switching the input of the user device from the output of the buffer storage read to the output of the other buffer storage when, on the other hand, said other buffer storage is full, and, on the other hand, the output levels of said storages are within a predetermined range.

2. A system according to claim 1, characterized in that said buffer storages (12, 16) are digital storages and an analog-to-digital converter (6) connected to the input of said buffer storages receives the analog speech signals and supplies the digital signals to said buffer storages.

3. A system according to claim 2, characterized in that it further comprises first (20) and second (24) digital-to-analog converters respectively connected to the outputs of said first (12) and second (16) buffer storages, and comparison means (64, 68, 72) for comparing the outputs of said first and second digital-to-analog converters, said switching means (28) switching the input of the user device from the output of one of said digital-to-analog converters to the output of the other one when the output levels of said converters are within a predetermined range.

4. A system according to claim 3, characterized in that said switching means (28) switch the input to the user device from the output of one of said digital-to-analog converters (20 or 24) to the output of the other one when their output levels are in the vicinity of the zero level, said predetermined range being centred on the zero level.

5. A system according to any one of claims 3 and 4, characterized in that said switching means (28) switch the input of the user device from the output of one of said digital-to-analog converters (20 or 24) to the output of the other one when their output levels are substantially equal.

6. A system according to any one of claims 3 to 5, characterized in that the amplitude of said predetermined range is less than 2% of the maximum amplitude of the output levels of said digital-to-analog converters (20, 24).

7. A system according to any one of claims 3 to 6, characterized in that said switching means (28) switch the input of the user device from the output of one (20) of said digital-to-analog converters to the output of the other one (24) when the buffer storage (12) read is empty while the conditions relating to the output levels of said digital-to-analog converters are not fulfilled.

8. A system according to any one of claims 3 to 7, characterized in that said comparison means comprise:

a first comparator (64) for supplying a signal in case the output levels of said digital-to-analog converters (20, 24) are equal,

a second comparator (68) for supplying a signal if the output of one of said digital-to-analog converters is less than a first predetermined value,

a third comparator (72) for supplying a signal if the output of the other one of said digital-to-analog converters is greater than a second predetermined value,

a means for supplying a switching signal to switch the input of the user device from the output of one of said digital-to-analog converters to the output of the other one in response to the signals supplied by said first, second and third comparators.

FIG. 1

0013341

FIG. 2

0013341

0013341

FIG. 3